(19) Europäisches Patentamt

European Patent Office

Office européen des brevets

(11) EP 2 597 911 A1

(12) EUROPEAN PATENT APPLICATION

(43) Date of publication:
29.05.2013 Bulletin 2013/22

(51) Int Cl.:
H04W 40/24 (2009.01)          H04L 12/70 (2013.01)
H04W 84/18 (2009.01)

(21) Application number: 11185261.2

(22) Date of filing: 14.10.2011

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicants:
• Mitsubishi Electric R&D Centre Europe B.V.
1119 NS  Schiphol Rijk (NL)
Designated Contracting States:
FR
• Mitsubishi Electric Corporation
Chiyoda-ku
Tokyo 100-8310 (JP)
Designated Contracting States:
AL AT BE BG CH CY CZ DE DK EE ES FI GB GR
HR HU IE IS IT LI LT LU LV MC MK MT NL NO PL
PT RO RS SE SI SK SM TR

(72) Inventor: Gresset, Nicolas
35708 Rennes Cedex 7 (FR)

(74) Representative: Maillet, Alain et al
Cabinet Le Guen & Maillet
5, place Newquay
B.P. 70250
35802 Dinard Cedex (FR)

(54) **Method for reducing a time period to collect data from nodes of a wireless mesh communications network**

(57)     A method for reducing a time period needed by a data gathering device to collect data from nodes of a wireless mesh communications network, communications between the data gathering device and the nodes being performed according to routes of a spanning tree, is such that the data gathering device: obtains a metric for each route, the metric being representative of a level of reliability of the route; determining a first scheduling sequence for collecting said data according to the obtained metrics; transmitting requests to said nodes according to the first scheduling sequence; updating at least one of said metrics according to variations in transmission conditions; modifying the first scheduling sequence to obtain a second scheduling sequence according to the metrics after updating; and continuing transmitting requests to the nodes according to the second scheduling sequence.

Fig. 5A

**Description**

The present invention generally relates to collecting data in a wireless mesh communications network and more particularly to reducing the time period needed to collect such data in a wireless mesh communications network subject to variations in the transmission conditions.

Wireless Sensor Networks (WSNs) have gained interest and popularity for being self-configuring, rather inexpensive, and useful for a very wide range of possible applications, such as energy control, environmental monitoring, industrial automation...

Smart Meter Networks (SMNs) is an application example of such Wireless Sensor Networks. A smart meter is usually an electrical meter that records consumption of electric energy in intervals of a given period and communicates that information to a server for monitoring and billing purposes. Smart meters are usually able to receive commands from a central system. Smart meters are also used in other data capturing domains and can for instance also mean devices measuring natural gas or water consumption.

A data gathering device is typically implemented in such SMNs in the form of a server. The data gathering device collects data provided by the smart meters and processes the collected data, for instance for statistics and/or monitoring and/or billing purposes. For collecting such data, the data gathering device defines a scheduling sequence and transmits, according to the defined scheduling sequence, a request to each smart meter of the SMN for requesting said smart meter to provide said data to the data gathering device. In order to avoid collision in the propagation of messages throughout the SMN, the scheduling sequence is such that the data gathering device waits for receiving a response to a transmitted request before transmitting a new request to another smart meter. In response to the request, each smart meter transmits a response comprising said requested data. The requested data are for instance metering data obtained by the smart meter during measurements of water, gas or electric energy. The transmissions of requests and responses in the SMN are typically performed along a spanning tree, which defines the routing in the SMN

However, when there are transmission issues due to variations in the transmission conditions, such as a wireless link in the SMN that is temporarily no more operational, the transmissions of requests and responses may be delayed.

Generally, when such a transmission issue occurs, the routing in the SMN is modified. It means that new routes are defined and that the spanning tree is accordingly modified and propagated in the SMN so that all the nodes of the wireless mesh communications network are aware of the spanning tree modifications. This redefinition of the routes is time consuming and the time period needed to collect the data is therefore increased.

The aforementioned problems may also occur in wireless mesh communications networks of other kind, not specifically being related to the deployment of smart meters.

It is desirable to overcome the aforementioned problems which occur in typical wireless mesh communications networks.

In particular, it is desirable to provide a solution that allows reducing the time needed to collect data by a gathering device in a wireless mesh communications network subject to variations in the transmission conditions.

It is furthermore desirable to provide a solution that allows avoiding reconfiguring the routing, along a spanning tree, in the wireless mesh communications network when transmission issues are detected.

It is furthermore desirable to provide a solution that is easy-to-implement and that is cost-effective.

To that end, the present invention concerns a method for reducing a time period needed by a data gathering device to collect data from nodes of a wireless mesh communications network, said nodes being interconnected by wireless links, communications between said data gathering device and said nodes being performed according to routes of a spanning tree in the wireless mesh communications network. The method is such that said data gathering device performs: obtaining a metric for each route of the spanning tree, the metric being representative of a level of reliability of said route; determining a first scheduling sequence for collecting said data according to the obtained metrics; transmitting requests to said nodes according to the first scheduling sequence for collecting said data, each request being addressed to at least one said node; updating at least one of said metrics according to variations in transmission conditions in said wireless mesh communications network; modifying the first scheduling sequence to obtain a second scheduling sequence according to the metrics after updating; and continuing transmitting requests to said nodes according to the second scheduling sequence.

Thus, by adapting the scheduling sequence to variations in transmission conditions in the wireless mesh communications network, requests having a greater chance of transmission success are transmitted first according to the second scheduling sequence. No modification of the spanning tree is then necessary when the transmission issue is temporary, and thus the time period needed to collect the data by the data gathering device is reduced.

According to a particular feature, said data gathering device performs: receiving from at least one node an information about transmission conditions or variations in transmission conditions over at least one wireless link; determining at least one route of the spanning tree comprising said wireless link; and the updating of at least one of said metrics is performed for the wireless links comprised in said determined route(s).

Thus, the data gathering device is able to determine all the routes concerned by said transmission conditions or variations in transmission conditions and the scheduling sequence can be more efficiently adapted.

According to a particular feature, said data gathering device performs: receiving a wireless link failure report generated by one node, said report comprising an indication of a wireless link via which said request has been attempted to be relayed by said node having generated the report, and said report being representative of a transmission failure that occurred, on said wireless link indicated in the report or in the spanning tree portion corresponding to the child sub-tree of said wireless link indicated in the report, during a transmission of one of said requests or a response to one of said requests; and said routes are determined to be the routes including any node of said child sub-tree.

Thus, the routes concerned by the transmission failure are easily identified.

According to a particular feature, said wireless link failure report is generated by a node when a layer of said node receives, from the medium access control layer of said node, a notification indicating that said request attempted to be relayed generated in response at least one non-acknowledgement.

Thus, when the transmission issue occurs during the transmission of one of said request, the portion of the spanning tree which is identified as impacted by the transmission failure is limited to the wireless link on which the transmission issue occurred and to the child sub-tree of this wireless link.

According to a particular feature, said wireless link failure report is generated by a node when a timeout expires without said node receiving a response nor another wireless link failure report, from a node to which one of said request is addressed, to said request with which the timeout is associated.

Thus, when the transmission failure occurs during the transmission of a response to one of said request, the portion of the spanning tree which is identified as impacted by the transmission issue is limited to the wireless link on which the transmission issue occurred and to the child sub-tree of this wireless link.

According to a particular feature, said timeout is set up by at least taking into account the number of hops in the spanning tree, between the node setting up said timeout and the node to which the request associated with said timeout is addressed.

Thus, the timeout setup is adapted according to the remaining route of the request, and of its response, up to the node to which the request is addressed, in order to further reduce the time period needed to collect the data. The method is also more reactive for detecting transmission issues and the time period needed to collect data by the data gathering device is therefore further reduced.

According to a particular feature, the node generating the wireless link failure report performs: checking whether said node generating the wireless link failure report already responded to one of said requests; including in the wireless link failure report its own data to be collected by said device, when said node generating the wireless link failure report did not already respond to one of said requests.

Thus, by anticipating the transmission of data to be collected, the time period needed to collect data by the data gathering device is further reduced.

According to a particular feature, said data gathering device performs, upon receiving one of said wireless link failure report: incrementing a metric, for each wireless link comprised in said determined route(s); sorting the routes of the spanning tree to reach each node from which data remains to be collected according to the metrics; and said data gathering device modifies the first scheduling sequence to obtain the second scheduling sequence by taking into account the routes sorted according to the metrics.

Thus, the method uses an easy-to-implement metric.

According to a particular feature, said data gathering device performs: receiving, from the nodes of said wireless mesh communications network, information representative of a probability of transmission success on at least one wireless link of which said node is one end; computing a probability of transmission success on each route to reach each node from which data remains to be collected, according to the received information; and said data gathering device modifies the first scheduling sequence to obtain the second scheduling sequence by taking into account the computed probabilities.

Thus, transmission issues can be anticipated and the data gathering device can estimate in advance at what instant, or timeframe, a request can be scheduled with a good chance of success in collecting the data without transmission issue.

According to a particular feature, said data gathering device performs computing said probability of transmission success by performing, for each wireless link of a route: determining a number of hops for a message to reach the considered wireless link; multiplying the determined number of hops by a per-hop reference time period value, in order to obtain a propagation delay or timeframe; determines the instant, or timeframe, at which said wireless link should be in use to transmit either one of said request or a response to one of said request, on the basis of an instant at which the transmission of the request is scheduled and of the obtained propagation delay or timeframe; and determining from the received information representative of a probability of transmission success a probability of success of transmission when said wireless link is determined to be used.

Thus, the data gathering device can optimally modify the scheduling sequence by use of probability of success of transmission via the routes derived from a probability of success of transmission via the wireless links making said routes.

According to a particular feature, said data gathering device performs: receiving periodically channel estimation, or channel quality indicators, from each node of a route; and performing a channel prediction based on the received channel estimation and an aging received channel estimation.

According to a particular feature, in order to provide information representative of a probability of transmission success on at least one wireless link, each node performs after transmitting a given message: updating a first parameter representing a distribution of time periods elapsed when transmitting respective messages since the transmission of the last successfully transmitted message; updating a second parameter representing a distribution of time periods elapsed when transmitting respective messages since the transmission of the last unsuccessfully transmitted message; updating a third parameter representing a distribution of time periods elapsed when transmitting respective messages since the transmission of the last successfully transmitted message when the transmission of said given message is successful; and updating a fourth parameter representing a distribution of time periods elapsed when transmitting respective messages since the transmission of the last unsuccessfully transmitted message, when the transmission of said given message is successful.

The present invention also concerns a device for reducing a time period needed by a data gathering device to collect data from nodes of a wireless mesh communications network, said nodes being interconnected by wireless links, communications between said data gathering device and said nodes being performed according to routes of a spanning tree in the wireless mesh communications network. The device comprises: means for obtaining a metric for each route of the spanning tree, the metric being representative of a level of reliability of said route; means for determining a first scheduling sequence for collecting said data according to the obtained metrics; means for transmitting requests to said nodes according to the first scheduling sequence for collecting said data, each request being addressed to at least one said node; means for updating at least one of said metrics according to variations in transmission conditions in said wireless mesh communications network; means for modifying the first scheduling sequence to obtain a second scheduling sequence according to the metrics after updating; and means for continuing transmitting requests to said nodes according to the second scheduling sequence.

The present invention also concerns, in at least one embodiment, a computer program that can be downloaded from a communication network and/or stored on a medium that can be read by a computer and run by a processor. This computer program comprises instructions for implementing the aforementioned methods in any one of their various embodiments, when said program is run by the processor.

The present invention also concerns an information storage means, storing a computer program comprising a set of instructions that can be run by a processor for implementing the aforementioned methods in any one of their various embodiments, when the stored information is read by a computer and run by a processor.

Since the features and advantages related to the device and to the computer program are identical to those already mentioned with regard to the corresponding aforementioned methods, they are not repeated here.

The characteristics of the invention will emerge more clearly from a reading of the following description of an example of embodiment, said description being produced with reference to the accompanying drawings, among which:

Fig. 1 schematically represents a first architecture of a wireless mesh communications network in which the present invention may be implemented;

Fig. 2 schematically represents a second architecture of a wireless mesh communications network in which the present invention may be implemented;

Fig. 3 schematically represents a spanning tree defined in the wireless mesh communications network of Fig. 1;

Fig. 4A schematically represents an architecture of a concentrator device of the wireless mesh communications network of Fig. 1 or 2;

Fig. 4B schematically represents an architecture of a server device of the wireless mesh communications network of Fig. 2;

Fig. 4C schematically represents an architecture of a smart meter of the wireless mesh communications network of Fig. 1 or 2;

Fig. 5A schematically represents a first algorithm performed by a data gathering device of the wireless mesh communications network of Fig. 1 or 2 for collecting data from smart meters;

Fig. 5B schematically represents a second algorithm performed by a data gathering device of the wireless mesh communications network of Fig. 1 or 2 for collecting data from smart meters;

Fig. 5C schematically represents a third algorithm performed by a data gathering device of the wireless mesh communications network of Fig. 1 or 2 for collecting data from smart meters;

Fig. 6 schematically represents an algorithm performed by a smart meter of the wireless mesh communications network of Fig. 1 or 2, or by a concentrator device of the wireless mesh communications network of Fig. 2;

Fig. 7A schematically represents a sequence for scheduling data collecting phases for collecting data from smart meters of the wireless mesh communications network of Fig. 1 or 2;

Fig. 7B schematically represents a modified sequence for scheduling data collecting phases for collecting data from the smart meters.

Even though the following description details the present invention in the scope of a deployment of wireless mesh communications networks of smart meters, the principles detailed hereinafter may be similarly applied in the deployment of other kinds of wireless mesh communications networks. For instance, the principles detailed hereinafter may be similarly applied in a deployment of femtocells, i.e. a deployment of cellular base stations typically designed for use in a home or small office allowing service providers to extend service coverage indoors, especially where access would otherwise be limited or unavailable.

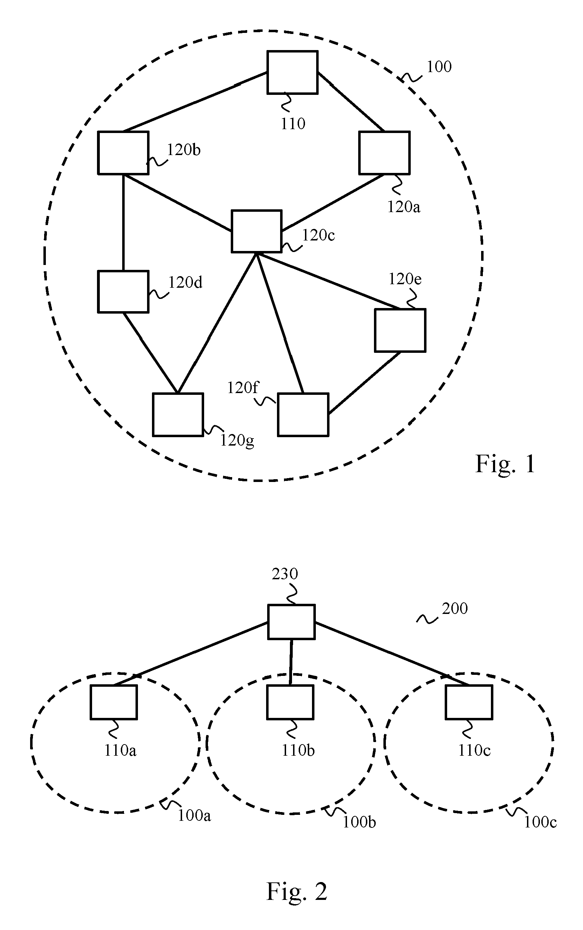

**Fig.1** schematically represents a first architecture of a wireless mesh communications network 100 in which the present invention may be implemented.

The wireless mesh communications network 100 comprises a concentrator device 110 and a set of smart meters, also referred to as smart metering devices. Seven smart meters 120i, wherein i = a, b,..., g, are shown in Fig. 1. A different plurality of smart meters may be present in the wireless mesh communications network 100. The communications network 100 is also referred to as cluster.

The concentrator device 110 and the smart meters may also be referred to as *nodes, communication nodes* or *network nodes.*

The devices of the wireless mesh communications network 100 preferably use half-duplex wireless communications. The devices of the wireless mesh communications network 100 may however use full-duplex wireless communications.

Such a wireless mesh communications network is particularly adapted to a deployment of smart meters in *ad-hoc* fashion.

In order to limit the power consumption and the radiations, the devices in the wireless mesh communications network 100 cannot communicate directly with any other device in the wireless mesh communications network 100. Each device in the wireless mesh communications network 100 is usually able to communicate directly with only few other devices in the wireless mesh communications network 100. It means that, for these few other devices, the transmission signal strength is considered sufficiently high, *e.g.* above a predetermined threshold, for setting up a wireless link for exchanging synchronization signals, messages and more generally data.

Each device of the wireless mesh communications network 100 is therefore able to communicate directly with at least one other device of the wireless mesh communications network 100.

Two devices of the wireless mesh communications network 100 communicating directly together are neighbouring devices.

Any couple of devices of the wireless mesh communications network 100 can communicate together, either directly or indirectly, i.e. via at least one other device of the wireless mesh communications network 100. More particularly, each smart meter 120i, wherein i = a, b,..., g, can communicate with the concentrator device 110, either directly or indirectly.

In Fig. 1, possible direct communications, referred to hereinafter as *wireless links,* are illustratively represented by respective straight lines between the concerned devices. For instance: the concentrator device 110 has two neighbouring devices, which are the smart meters 120a, 120b; the smart meter 120a has two neighbouring devices, which are the smart meter 120c and the concentrator device 110; and the smart meter 120b has three neighbouring devices, which are the smarts meters 120c, 120d and the concentrator device 110. Fig. 1 illustratively shows other possible direct communications in the wireless mesh communications network 100, but they are not further detailed herein.

The communications in the wireless mesh communications network 100 are preferably performed using CSMA (Carrier sense multiple access). The communications in the wireless mesh communications network 100 may also be performed using TDMA, FDMA or CDMA *(Code Division Multiple Access).* The communication protocol between neighbouring nodes might include acknowledgements (ACK) and non-acknowledgements (NACK) in order to allow several transmission attempts before concluding to a communication failure between the two neighbouring nodes. Typically such an acknowledgement based protocol is performed at MAC *(Medium Access Control)* layer.

In the scope of the wireless mesh communications network 100, the concentrator device 110 acts as a data gathering device. The concentrator device 110 collects the data provided by the smart meters and processes the collected data, for instance for statistics and/or monitoring and/or billing purposes. For collecting such data, the concentrator device 110 transmits a request to each smart meter 120i, wherein i = a, b,..., g, for requesting said smart meter 120i to provide said data to the concentrator device 110. In response to the request, each smart meter 120i transmits a response comprising said requested data. The requested data are for instance metering data obtained by the smart meter 120i during measurements of water, gas or electric energy. The concentrator device 110 may request other kind of data to the smart meters, such as status information, measurement history or error reporting.

**Fig.2** schematically represents a second architecture of a wireless mesh communications network 200 in which the present invention may be implemented.

The wireless mesh communications network 200 comprises a server device 230 and a set of concentrator devices. Three concentrator devices 110m, wherein m = a, b or c, are shown in Fig. 2. A different plurality of concentrator devices may be present in the wireless mesh communications network 200.

Each concentrator device 110m communicates directly with the server device 230. The communications between the concentrator devices 110m and the server device 230 are preferably performed using the Internet Protocol (IP), as detailed by the RFC 791 specification, and may be either wired or wireless.

Each concentrator device 110m is part of a cluster 100m, wherein m = a, b or c, which corresponds to the wireless mesh communications network 100 shown in Fig. 1. The concentrator devices 110m act as gateways between the server device 230 and the smart meters of the respective clusters 100m to which said concentrator devices 110m respectively belong.

In the architecture shown in Fig. 2, each smart meter belongs to only one cluster and communicates with the server device 230 via a single concentrator device 110m.

In the architecture shown in Fig. 2, the clusters 100m are connected to the server device 230 via respective concentrator devices 110m using a star topology network.

The server device 230 may transmit commands to any smart meter via a concentrator device 110m. Such commands are for instance for requesting some reporting from the smart meter, for instructing a shutdown of a system monitored by the smart meter, for providing a software update to the smart meter...

In the scope of the mesh communications network 200, the server device 230 acts as the data gathering device. The server device 230 therefore transmits a request to each smart meter to collect the data to be gathered.

The data gathering device, whether it corresponds to the concentrator device 110 of the wireless mesh communications network 100 or to the server device 230 of the wireless mesh communications network 200, collects the data to be gathered according to a sequence of collecting phases. The messages exchanged during these collecting phases are propagated in the wireless mesh communications network 100 or 200 along a spanning tree.

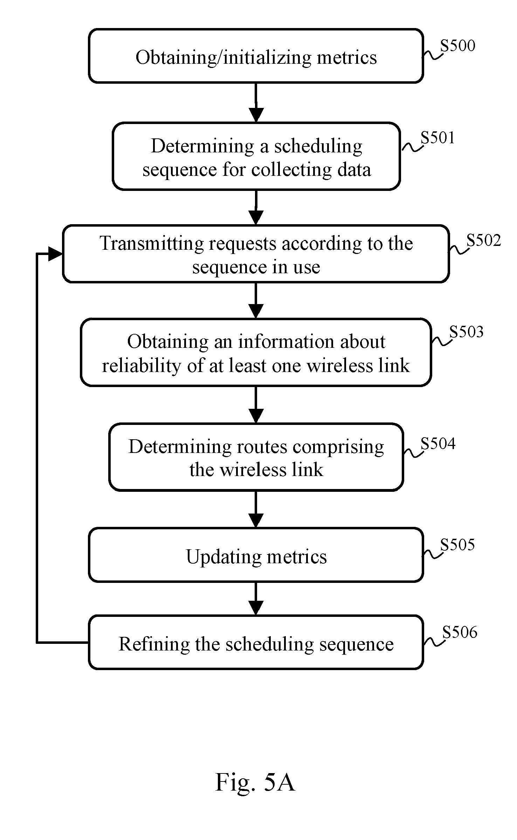

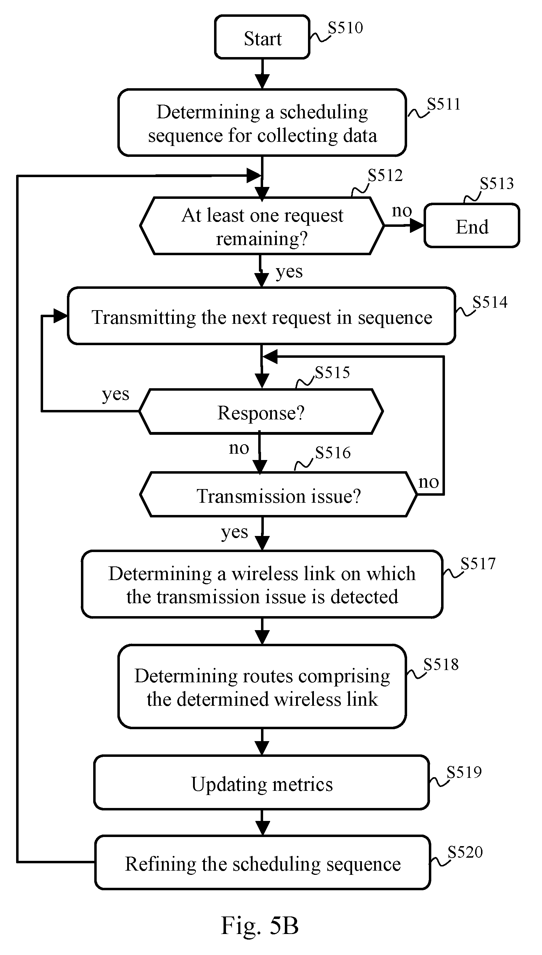

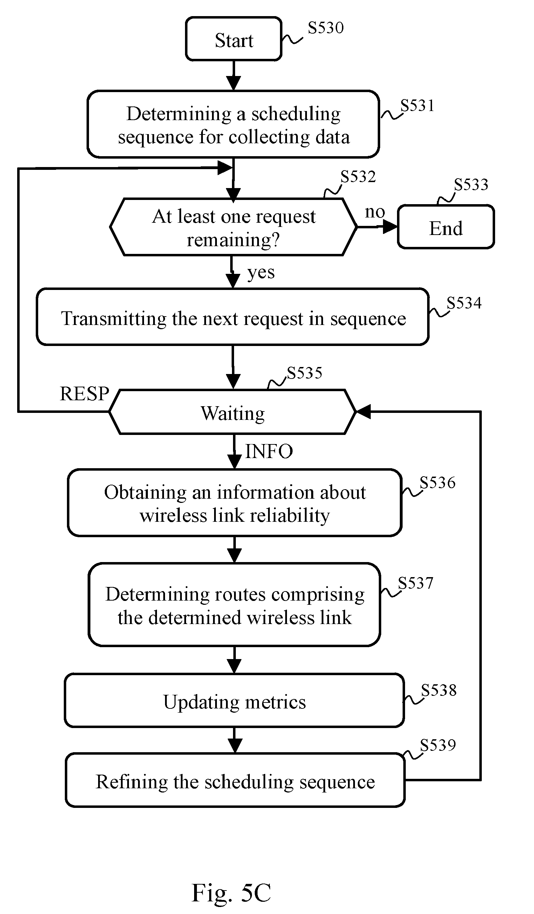

The sequence is subject to dynamic adjustments, as detailed hereafter with regard to Fig. 5. Such adjustments aim at reducing the time period needed to collect the data by the data gathering device, avoiding any modification of the spanning tree. If, however, a predetermined number of unsuccessful attempts to communicate with a smart meter for collecting the data is reached, the data gathering device may decide modifying the data routing throughout the wireless mesh communications network, *i.e.* modifying the spanning tree.

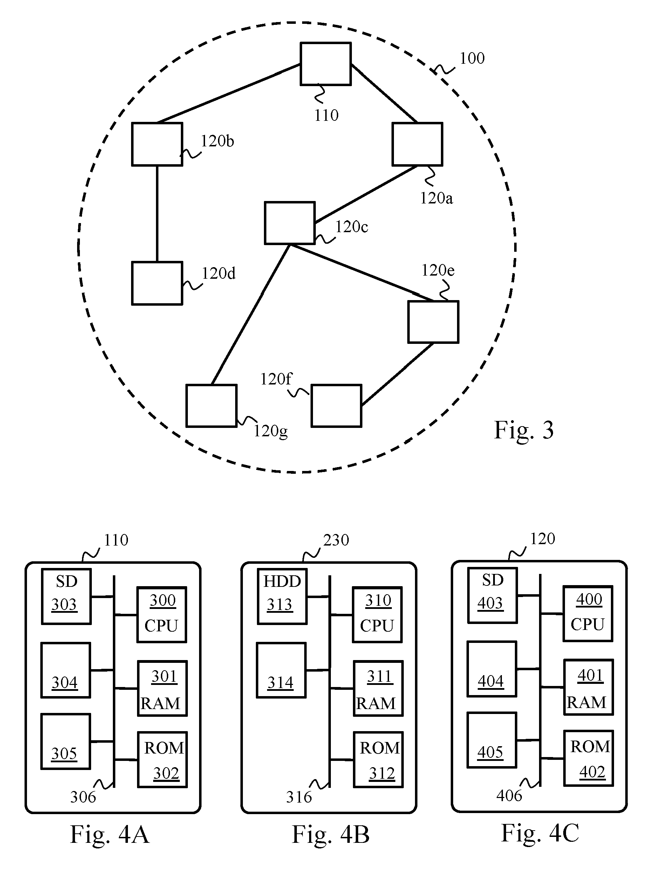

**Fig. 3** schematically represents a spanning tree defined in the wireless mesh communications network 100. Spanning trees may similarly be defined for the clusters 100a, 100b, 100c of the wireless mesh communications network 200. A single spanning tree may also be defined for the whole wireless mesh communications network 200.

For collecting data provided by the smart meters, the data gathering device uses such a spanning tree. In other words, the request transmitted by the data gathering device to the smart meters and the responses respectively transmitted by the smart meters to the data gathering device are propagated along the spanning tree.

The spanning tree shown in Fig. 3 consists in a subset of the wireless links of the wireless mesh communications network 100. Each spanning tree comprises a root node. The root node of the spanning tree is the data gathering device, *i.e.* the concentrator device 100 in the scope of the wireless mesh communications network 100. The spanning tree is defined so that every node of the wireless mesh communications network 100 lies in the spanning tree, but no loops are formed.

According to the spanning tree shown in Fig. 3: the concentrator device 100 communicates with the smart meter 120d via the smart meter 120b; the concentrator device 100 communicates with the smart meter 120c via the smart meter 120a; the concentrator device 100 communicates with the smart meter 120g via the smart meters 120a and 120c; the concentrator device 100 communicates with the smart meter 120e also via the smart meters 120a and 120c; and the concentrator device 100 communicates with the smart meters 120f via the smart meters 120a, 120c and 120e.

Each wireless link in a spanning tree is set up between a parent node and a child node. The parent node is the node that necessitates a smaller number of hops to reach the root of the spanning tree. For instance, considering the wireless link between the smart meters 120a and 120c, the smart meter 120a is the parent node and the smart meter 120c is the child node.

Each node of the wireless mesh communications network 100 is aware of the spanning tree in use. Each node may only be aware of the spanning tree portion that includes itself, its child sub-tree and its parent in the spanning tree. A child sub-tree with reference to one node refers to the portion of the spanning tree that includes all the children nodes of the considered node and their respective child sub-trees, if any. For instance, in the spanning tree shown in Fig. 3, the child sub-tree of the node 120c includes two branches, the first one comprising the node 120g and the second one comprising the node 120e and its child node 120f. A child sub-tree with reference to one wireless link between a parent node and a child node refers to the portion of the spanning tree that includes said child node and the child sub-tree of said child node, if any. For instance, in the spanning tree shown in Fig. 3, the child sub-tree of the wireless link between the nodes 120a and 120c includes the node 120c and two branches, the first one comprising the node 120g and the second one comprising the node 120e and its child node 120f.

The spanning tree defines routes between the data gathering device, which is the root node of the spanning tree, and any other node of the wireless mesh communications network. Each route may only consist in the successive wireless links from the data gathering device to the considered smart meter, when each wireless link is reciprocal in terms of channel conditions. The route may consist in the successive wireless links from the server device 230 to the concerned smart meter and from concerned smart meter to the server device 230, when the wireless links are not reciprocal in terms of channel conditions.

Many algorithms and protocols are known by the one ordinary skilled in the art to build spanning trees from a wireless mesh communications network. Even though the present invention can be implemented in the context of dynamically changing spanning trees, it aims at limiting and even avoiding modifying the routing between nodes of the wireless communications network and the spanning tree may then be preset. Therefore the building of spanning tree won't be further detailed herein.

**Fig. 4A** schematically represents an architecture of the concentrator device 110. The concentrator device 110 may correspond to any concentrator device 110m, wherein m = a, b or c with reference to Fig. 2.

According to the shown architecture, the concentrator device 110 comprises the following components interconnected by a communications bus 306: a processor, microprocessor, microcontroller or CPU (*Central Processing Unit*) 300; a RAM (*Random-Access Memory*) 301; a ROM (*Read-Only Memory*) 302; an SD (*Secure Digital*) card reader 303, or any other device adapted to read information stored on storage means; a first communication interface 304 and a second communication interface 305.

The first communication interface 304 allows the concentrator device 110 to wirelessly communicate with neighbouring smart meters in the wireless mesh communications network 100.

The second communication interface 305 allows the concentrator device 110 to communicate with the server 230.

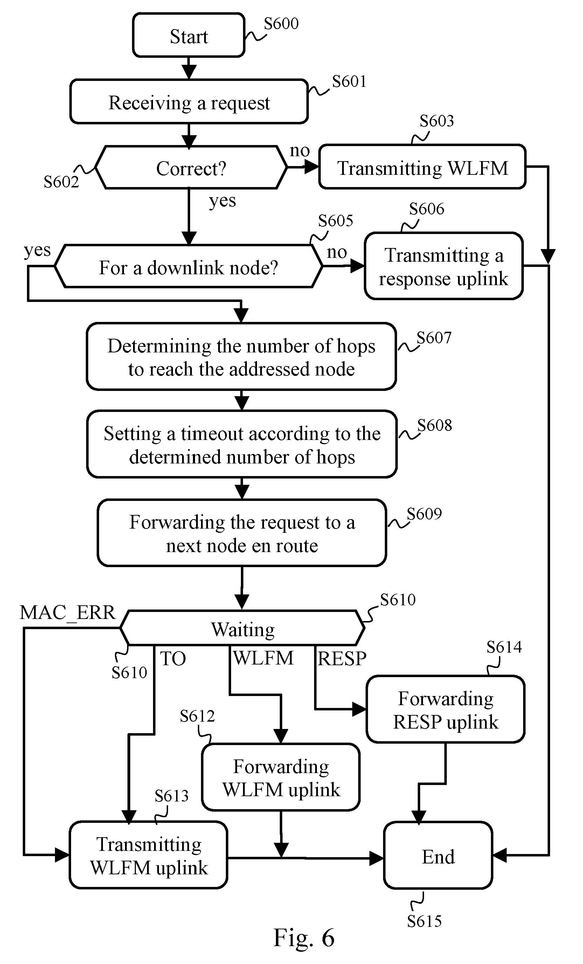

CPU 300 is capable of executing instructions loaded into RAM 301 from ROM 302 or from an external memory, such as an SD card. After the concentrator device 110 has been powered on, CPU 300 is capable of reading instructions from RAM 301 and executing these instructions. The instructions form one computer program that causes CPU 300 to perform some or all of the steps of the algorithms described hereafter with regard to Fig. 6, or to Figs. 5A, 5B, 5C when the concentrator device 110 acts as the data gathering device.

Any and all steps of the algorithms described hereafter with regard to Fig. 6, or to Figs. 5A, 5B, 5C when the concentrator device 110 acts as the data gathering device, may be implemented in software by execution of a set of instructions or program by a programmable computing machine, such as a PC *(Personal Computer),* a DSP *(Digital Signal Processor)* or a microcontroller; or else implemented in hardware by a machine or a dedicated component, such as an FPGA *(Field Programmable Gate Array*) or an ASIC *(Application-Specific Integrated Circuit).*

**Fig. 4B** schematically represents an architecture of the server device 230.

According to the shown architecture, the server device 230 comprises the following components interconnected by a communications bus 316: a processor, microprocessor, microcontroller or CPU 310; a RAM 311; a ROM 312; an HDD *(Hard Disk Drive)* 313, or any other device adapted to read information stored on storage means; a communication interface 314.

The communication interface 314 allows the server device 230 to communicate with the concentrator devices 110a, 110b, 110c.

CPU 310 is capable of executing instructions loaded into RAM 311 from ROM 312 or from an external memory, such as the HDD 313. After the server device 230 has been powered on, CPU 310 is capable of reading instructions from RAM 311 and executing these instructions. The instructions form one computer program that causes CPU 310 to perform some or all of the steps of the algorithms described hereafter with regard to Figs. 5A, 5B, 5C.

Any and all steps of the algorithms described hereafter with regard to Figs. 5A, 5B, 5C may be implemented in software by execution of a set of instructions or program by a programmable computing machine, such as a PC, a DSP or a microcontroller; or else implemented in hardware by a machine or a dedicated component, such as an FPGA or an ASIC.

**Fig. 4C** schematically represents an architecture of a smart meter 120. The smart meter 120 corresponds to any smart meter 120i, wherein i = a, b,..., g with reference to Fig. 1.

According to the shown architecture, the smart meter 120 comprises the following components interconnected by a communications bus 406: a processor, microprocessor, microcontroller or CPU 400; a RAM 401; a ROM 402; an SD card reader 403, or any other device adapted to read information stored on storage means; a communication interface 404; and a metering interface 405.

The first communication interface 404 allows the smart meter 120 to wirelessly communicate with any neighbouring device in the wireless mesh communications network 100 or 200, said neighbouring device being either another smart meter or a concentrator device.

The metering interface 405 allows the smart meter 120 to perform monitoring, measurements and data captures, such as electrical or water consumption data. The metering interface 405 allows the smart meter 120 to transmit commands to the monitored system.

CPU 400 is capable of executing instructions loaded into RAM 401 from ROM 402 or from an external memory, such as an SD card. After the smart meter device 120 has been powered on, CPU 400 is capable of reading instructions from RAM 401 and executing these instructions. The instructions form one computer program that causes CPU 400 to perform some or all of the steps of the algorithms described hereafter with regard to Fig. 6.

Any and all steps of the algorithm described hereafter with regard to Fig. 6 may be implemented in software by execution of a set of instructions or program by a programmable computing machine, such as a PC, a DSP or a microcontroller; or else implemented in hardware by a machine or a dedicated component, such as an FPGA or an ASIC.

**Fig. 5A** schematically represents an algorithm performed by the data gathering device. The data gathering device is the server device 230 in the scope of the wireless mesh communications network 200 and the concentrator device 110 in the scope of the wireless mesh communications network 100. Let's consider in the following that the data gathering device is the server device 230.

In a step S500, the server device 230 obtains a metric for each route of the spanning tree, the metric being representative of a level of reliability of said route. At the first occurrence of the step S500, the metrics may be set to a default value or determined on the basis of transmission conditions over their respective routes. Different examples of such metrics are described hereafter with regard to Figs. 5B, 5C and 8.

In a following step S501, the server device 230 determines a scheduling sequence of collecting phases for collecting the data, according to the metric obtained in the step S500. If all metrics are initialized to a same value, the server device 230 may arbitrarily define the sequence or apply a default sequence.

The server device 230 preferably requests the data to be gathered to one smart meter at a time. It means that the server device 230 preferably waits for receiving a response, or a transmission failure notification, to a request before initiating another request.

The server device 230 may however request the data to be gathered to several smart meters at a time, but not all at once. According to a first example, in the spanning tree shown in Fig. 3, the server device 230 may simultaneously request the data to be gathered to the smart meters 120c, 120e, 120f and 120g, which are in the child sub-tree of the smart meter 120a. To achieve this, the server device 230 may transmit a request for collecting said data, said request comprising a request identifier indicating that the request concerns the collecting of data for a portion of the spanning tree, as well as an identifier of the smart meter 120c. When it receives such a request, the smart meter 120c forwards the request to the smart meter 120g and to the smart meter 120e, and transmits a response comprising its own data toward the server device 230. Therefore, the server device 230 may request the data to be gathered to a portion of the spanning tree, which corresponds to all the nodes that are in the child sub-tree of a given node, or in the child sub-tree of a given link. According to a second example, in the spanning tree shown in Fig. 3, the server device 230 may request the data to be gathered to the smart meter 120d then to the smart meter 120f without waiting for any response from the smart meter 120d. Therefore, the server device 230 may request, in overlapping data collecting phases, the data to be gathered to smart meters in different branches of the spanning tree. Addressing smart meters in different branches of the spanning tree limits the potential transmission collisions in the transmission of data, compared to requesting data to smart meters for which the respective routes share a common wireless link.

It is considered hereafter that the server device 230 requests the data to be gathered to one smart meter at a time.

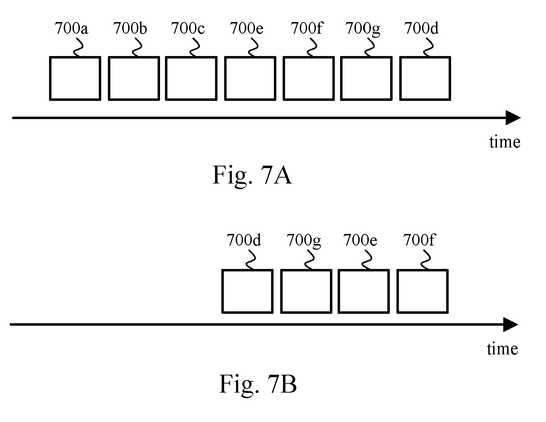

For instance, the server device 230 determines a scheduling sequence as shown in Fig. 7A.

**Fig. 7A** shows a scheduling sequence comprising:

- a data collecting phase 700a for requesting data to the smart meter 120a; then
- a data collecting phase 700b for requesting data to the smart meter 120b; then
- a data collecting phase 700c for requesting data to the smart meter 120c; then
- a data collecting phase 700e for requesting data to the smart meter 120e; then
- a data collecting phase 700f for requesting data to the smart meter 120f; then
- a data collecting phase 700g for requesting data to the smart meter 120g; then
- a data collecting phase 700d for requesting data to the smart meter 120d.

Each data collecting phase 700i, wherein i = a, b,..., g, comprises the downlink transmission of a request for collecting data from the gathering device to the smart meter 120i, and the uplink transmission of a response to said request for gathering data from the smart meter 120i to the gathering device. The terms *downlink* and *uplink* transmissions of a message are used with reference to the propagation of the message along the spanning tree compared to the position of the root node of the spanning tree, *i.e.* a message propagated toward the root node is considered as being transmitted *uplink* and is considered as being transmitted *downlink* when propagated in the reverse direction.

In a following step S502, the server device 230 starts transmitting the requests in sequence, according to the scheduling sequence determined in the step S501. For instance, when the response corresponding to the data collecting phase 700a has been received by the server device 230, the next request in sequence is addressed to the smart meter 120b, according to the scheduling sequence of Fig. 7A.

Each request for collecting data, which is transmitted by the server device 230 along the spanning tree, is a message comprising at least an identifier indicating that the message is such a request for collecting data and which type of data is expected to be collected in response and an identifier of the smart meter, or of the smart meters, to which the request is addressed.

In a following step S503, the server device 230 obtains an information about reliability of at least one wireless link of the spanning tree. Such an information is for instance an indication of a wireless link failure, as detailed hereafter with regard to Fig. 5B. Such an information is for instance a probability of wireless link failure, or an estimation of wireless link failure timeframe, or an estimation of wireless link success timeframe, or parameters allowing determination thereof, as described hereafter with regard to Figs. 5C.

The obtained information about reliability allows the server device 230 determining variations in transmission conditions in the wireless mesh communications network 200 and more particularly for wireless links comprised in the spanning tree.

In a following step S504, the server device 230 determines each route in the spanning tree which comprises the wireless link for which the information about reliability has been obtained in the step 5503.

In a following step S505, the server device 230 updates the metrics for each route determined in the step S504, by taking into account the information about reliability received in the step 5503.

In a following step S506, the server device 230 modifies the scheduling sequence on the basis of the metrics, taking into account the update performed in the step S505. In order to determine the modified scheduling sequence, the server device 230 sorts the remaining data collecting phases according to a metric representative of the route reliability for each data collecting phase.

For instance, the server device 230 modifies the scheduling sequence shown in Fig. 7A and obtains the scheduling sequence shown in Fig. 7B, in which it is considered that the data collecting phases 700a, 700b and 700c have been successfully performed.

**Fig. 7B** shows a modified scheduling sequence comprising:

- the data collecting phase 700d for requesting data to the smart meter 120d; then
- the data collecting phase 700g for requesting data to the smart meter 120g; then
- the data collecting phase 700e for requesting data to the smart meter 120e; then
- the data collecting phase 700f for requesting data to the smart meter 120f.

The modified scheduling sequence may result from a transmission issue detected on the wireless link between the smart meters 120c and 120e. Therefore, modifying the scheduling sequence by postponing the data collecting phases 700e and 700f, and consequently advancing the data collecting phases 700d and 700g, results in reordering the data collecting phases in order to request, first, data to be collected from nodes that are not concerned by the transmission issue on the wireless link between the smart meters 120a and 120c. The time period necessary to collect the data is therefore reduced and no modification of the spanning tree is required when the duration of the transmission issue is short compared to the minimum time period necessary to collect the data from all the smart meters.

Back to Fig. 5A, once it has modified the scheduling sequence, the server device 230 repeats the step S502 and therefore continues transmitting the requests according to the modified scheduling sequence.

**Fig. 5B** schematically represents a first embodiment of the algorithm performed by the data gathering device and illustrated in Fig. 5A. The data gathering device is the server device 230 in the scope of the wireless mesh communications network 200 and the concentrator device 110 in the scope of the wireless mesh communications network 100. Let's consider in the following that the data gathering device is the server device 230.

The algorithm starts in a step S510, in which the server device 230 performs initialization and more particularly obtains a metric for each route of the spanning tree, as already described with regard to the step S500.

In a following step S511, the server device 230 determines a scheduling sequence of collecting phases for collecting the data, according to the metric obtained in the step S510, as already described with regard to the step S501. The scheduling sequence determined in the step S511 corresponds for instance to the already-described scheduling sequence illustrated in Fig. 7A.

In a following step S512, the server device 230 checks whether at least one request remains to be transmitted. When at least one request remains to be transmitted, the server device 230 performs a step S514; otherwise, the algorithm ends in a step S513.

In the step S514, the server device 230 transmits the requests in sequence, according to the scheduling sequence in use.

In a following step S515, the server device 230 checks whether a response to the request transmitted in the step S514 is received. When such a response is received, the server device 230 stores the data collected from the concerned smart meter and repeats the step S514 by transmitting the next request in sequence, according to the scheduling sequence in use. The data collecting phase concerning the smart meter from which the response is received is therefore removed from the scheduling sequence. When no response is received, the server device 230 performs a step S516.

In the step S516, the server device 230 checks whether there is a transmission issue. Such a transmission issue may be detected following a report, referred to as WLFM *(Wireless Link Failure Message)* hereinafter, received by the server device 230 from one node of the wireless communications network, as detailed hereinafter with regard to Fig. 6. Such a WLFM is transmitted by the smart meter 120 in a step S613 as described hereafter with regard to Fig. 6. Such a transmission issue may also be detected following a report received by the server device 230 from one node of the wireless communications network, said report indicating difficulties in transmitting data over a given wireless link, *e.g.* numerous retransmissions required.

When there is a transmission issue, the server device 230 performs a step S517; otherwise, the server device 230 repeats the step S515.

In the step S517, the server device 230 determines a wireless link on which the transmission issue is detected.

In a following step S518, the server device 230 determines each route in the spanning tree which comprises the wireless link for which a transmission issue has been detected in the step S516.

In a following step S519, the server device 230 updates the metrics for each route determined in the step S518. To achieve this update, the server device 230 increments by one unit a metric for each route determined in the step S518. In other words, the metric is a counter that counts the occurrences of failures on any wireless link of the route. Therefore these metrics are preferably set to 0 the first time the algorithm is launched by the server device 230.

The server device 230 then sorts the routes according to the metric, preferably in increasing order. The server device 230 can then sort the remaining data collecting phases for collecting data from the smart meters, and modifies the scheduling sequence accordingly in a following step S520. The server device 230 is then able to modify the scheduling sequence by scheduling first the request that follows the route with the lowest value of the metric, and so on. The server device 230 therefore serves first the requests that have the greatest chances of success, as less wireless link failures occurred on their respective routes.

It can be noticed that only routes in the spanning tree to reach each node from which data remains to be collected need to be sorted.

In one embodiment, the server device 230 decrements the metric for each route on which no wireless link failure is detected during a given time period.

In the step S520, the server device 230 modifies the scheduling sequence on the basis of the metrics, taking into account the update performed in the step S519, as already described with regard to the step S506. The scheduling sequence resulting from the step S520 corresponds for instance to the already-described scheduling sequence illustrated in Fig. 7B.

Once it has modified the scheduling sequence, the server device 230 repeats the step S512 and therefore continues transmitting the requests according to the modified scheduling sequence.

It has to be noticed that the algorithm of Fig. 5B is illustrative and may be modified without departing from the present invention. More particularly, the server device 230 may check that a transmission issue occurred, occurs or is expected to occur. The server device 230 may therefore modify the scheduling sequence in use whereas no transmission occurs in the transmission of the last request or of its respective response, but a transmission issue has been detected during the transmission of another message between nodes or a decrease in a wireless link quality has been detected. Such a transmission issue or decrease in wireless link quality may then be reported by a node to the server device 230 independently of the data collecting phase 700i, wherein i = a, b,..., g, in progress.

**Fig. 5C** schematically represents a second embodiment of the algorithm performed by the data gathering device and illustrated in Fig. 5A. The data gathering device is the server device 230 in the scope of the wireless mesh communications network 200 and the concentrator device 110 in the scope of the wireless mesh communications network 100. Let's consider in the following that the data gathering device is the server device 230.

The algorithm starts in a step S530, in which the server device 230 performs initialization and more particularly obtains a metric for each route of the spanning tree, as already described with regard to the step S500.

In a following step S531, the server device 230 determines a scheduling sequence of collecting phases for collecting the data, according to the metric obtained in the step S530, as already described with regard to the step S501. The scheduling sequence determined in the step S531 corresponds for instance to the already-described scheduling sequence illustrated in Fig. 7A.

In a following step S532, the server device 230 checks whether at least one request remains to be transmitted. When at least one request remains to be transmitted, the server device 230 performs a step S534; otherwise, the algorithm ends in a step S533.

In the step S534, the server device 230 transmits the requests in sequence, according to the scheduling sequence in use.

In a following step S535, the server device 230 waits for detecting an event, which can be receiving of a response (RESP) from the smart meter 120 to which the request has been transmitted in the preceding occurrence of the step S534, or receiving of an information (INFO) about the reliability of a wireless link. Such an information is time-dependent.

When an information (INFO) about the reliability of a wireless link is received, the server device performs a step S536, in which said information is effectively obtained and then the server device 230 performs a step S537. The information about the reliability of a wireless link is representative of a probability of transmission success via the wireless link, or data enabling the computation of such a probability. This probability, which is time dependent, is denoted $P_{Li}$ hereinafter.

When the response (RESP) to the request is received from the smart meter to which the request was addressed, the server device 230 stores the data collected from the concerned smart meter and repeats the step S532 by transmitting the next request in sequence, according to the scheduling sequence in use. The data collecting phase concerning the smart meter from which the response is received is therefore removed from the scheduling sequence.

In the step S537, the server device 230 determines each route in the spanning tree which comprises the wireless link for which an information about reliability has been obtained in the step S536.

In a following step S538, the server device 230 updates the metrics for each route determined in the step S537. The metrics are in this embodiment representative of respective probabilities of transmission success over the routes. It is understood that the transmission success concerns the propagation of the request from the server device 230 to the concerned smart meter and the propagation of the response from the concerned smart meter to the server device 230. Therefore these metrics are preferably set to 1 the first time the algorithm is launched by the server device 230.

The server device 230 can determine whether a data collecting phase for a given smart meter should be successful, by determining whether the wireless links are expected to be operational, or not operational, when used as scheduled. In order to determine whether a wireless link would be expected to be operational when used as scheduled, the server device 230:

- determines the number of hops for a message to reach the considered wireless link;
- multiplies this determined number of hops by a per-hop reference time period value, in order to obtain a propagation delay or timeframe;
- determines the instant, or timeframe, at which the wireless link should be in use to transmit either the request or the response, on the basis of an instant at which the transmission of the request is scheduled and of the obtained propagation delay or timeframe; and
- determines from the information about wireless link reliability obtained in the step S536, a probability of success of transmission when the wireless link is determined to be used.

The per-hop reference time period value corresponds to the maximum allowed time period to process a message by one node and to convey the message from said node to a neighbouring node. The per-hop reference time period value may be provided by the server device 230 or may be deduced by the smart meter 120 itself based on long term statistics of transmissions with its neighbouring nodes.

The server device 230 can therefore determine a probability of success for a data collecting phase, based on a transmission performance prediction. Considering that the route $R_j$ from the server device 230 to a j-th node is a concatenation of wireless links L1,L2,..,LN and may be represented by a succession of the indexes of the wireless links L1,L2,..,LN, and considering that T is the relative time difference between the instant at which the computation is performed and the instant, or timeframe, at which the data collection command might be sent from the server and considering that $P_{Li}(x)$ defines the probability that the wireless link Li be operational at the instant x, then the probability $P(R_j, T)$ of the route $R_j$ to lead to a successful data collecting phase is:

$$P\left(R_j, T\right) = \prod_{i \in R_j} P_{Li}(T + d_{Li})$$

where $d_{Li}$ represents a known transmission latency for the wireless link Li, including the maximum allowed time period for processing any message and the maximum allowed time period for conveying the message via the wireless link.

The probability $P(R_j, T)$ of success of the data collection for node j at a future instant, or timeframe, is computed for at least one node and at least one future time instant.

The server device 230 then sorts, for each future transmission instant, or timeframe, represented by T, the routes according to the metric, preferably in a decreasing order. The server device 230 can then sort the remaining data collecting phases for collecting data from the smart meters, and modifies the scheduling sequence accordingly. The server device 230 is then able to modify the scheduling sequence by scheduling first the request that follows the route with the lowest value of the metric, and so on. The server device 230 therefore serves first the requests that have the greatest chances of success, as the probability of wireless link failures is lower on their respective routes.

In a following step S539, the server device 230 modifies the scheduling sequence on the basis of the metrics, taking into account the update performed in the step S538, as already described with regard to the step S506. The scheduling sequence resulting from the step S539 corresponds for instance to the already-described scheduling sequence illustrated in Fig. 7B.

Even though not shown in Fig. 5C, the scheduling sequence may also be modified when, after a predetermined time period, no response (RESP) has been received from the smart meter 120 to which the request has been transmitted in the preceding occurrence of the step S534. The most up-to-date metrics are then used in order to sort the routes for the smart meters for which data remains to be collected and to define the new scheduling sequence.

Moreover, even not shown in Fig. 5C, the receiving of a response (RESP) may be interpreted as an information about reliability of the wireless links of the route between the server device 230 and the smart meter to which the concerned request was addressed. The metrics can then be updated in accordance, therefore representing that the operational level of said wireless links has increased or has been restored to a default level.

Regarding the determining of the probability $P_{Li}(x)$ mentioned here above, two embodiments are presented here below.

According to a first embodiment for determining $P_{Li}(x)$, let's denote Pe(SNRdB) the performance, as a function of the signal to noise ratio in decibel, of the modulation and coding scheme applied in the wireless mesh communications network 100 or 200. Let's also consider an Additive White Gaussian Noise (AWGN) channel model. If the channel is a single path equivalent fading channel, which is for instance true when using single carrier modulations over slow fading channels, the average probability of transmission failure may be expressed as Pe(SNRdB+adB), wherein adB is the channel attenuation. If the channel attenuation varies sufficiently slowly to allow channel tracking, the probability of error can be predicted.

When it performs the channel prediction, the server device 230:

- periodically obtains channel estimation, or channel quality indicators (CQI), from each node;
- performs a channel prediction based on the received channel estimation and its aging.

An example of such channel prediction is shown hereafter.

The channel estimation, or channel quality indicators (CQI), may be provided by the smart meters on a regular basis, without being explicitly requested by the server device 230.

In order to compute $P_{Li}(x)$, the server device 230 considers the channel estimations $C_{Li,k}$ at K previous estimation times $t_{Li,l},...,t_{Li,k}$ and computes the prediction as the result of the function $f(x, t_{Li,l}, C_{Li,l},.., t_{Li,K}, C_{Li,K})$, which can for example be an implementation of a Kalman filter (see, for instance, "Channel estimation and prediction for adaptive OFDM downlinks," Mikael Sternad and Daniel Aronsson Vehicular Technology Conference, 2003. VTC 2003-Fall. 2003 IEEE 58th or "Kalman Filtering for Power Estimation in Mobile Communications," by Tao Jiang, Nicholas D. Sidiropoulos, Georgios B. Giannakis, IEEE Trans. Wireless Commun.).

The server device 230 then deduces an equivalent attenuation adB(Li,x) from the channel estimation. The attenuation adB(Li,x) itself may be tracked and predicted.

The server device 230 then computes Pe(SNRdB+adB), which is the predicted error rate.

The channel prediction may have poor performance when the difference between x and $t_{i,K}$ is long with respect to the channel coherence time. Thus, the server device 230 may apply a weighting function W(z) so as to take into account the likelihood of the channel prediction.

For instance, the weighting function W(x) may be defined as follows:

$$W(z) = \exp(-\mu(Li) * z)$$

wherein $\mu(Li)$ is a forgetting factor that can be adapted to the channel coherence time of the link Li, such that

$$P_{Li}(x) = W(x) * Pe(SNRdB + adB(Li,x)) + 0.5 * (1 - W(x))$$

A second embodiment for determining $P_{Li}(x)$ focuses on metrics based on transmissions failure/success detected at the MAC layer on the wireless link L$_i$. This allows reducing the amount of information exchanged, compared to the first embodiment for determining P$_{Li}$(x).

Each time a node transmits a message on the wireless link Li, it updates a parameter g$_s$(x$_s$,L$_i$), and each time a node successfully transmits a message on the wireless link Li, it updates a parameter f$_s$(x$_s$,L$_i$), where x$_s$ is the time duration from the last successfully transmitted packet on the wireless link Li. The parameter g$_s$(x$_s$,L$_i$) therefore represents a distribution of time periods elapsed when transmitting respective messages since the transmission of the last successfully transmitted message; and the parameter f$_s$(x$_s$,L$_i$) represents a distribution of time periods elapsed between two successful transmissions of messages.

Each time a node transmits a message on the wireless link Li, it updates a parameter g$_f$(x$_f$,L$_i$), and each time a node successfully transmits a message on the wireless link Li, it updates a parameter f$_f$(x$_f$,L$_i$), where x$_f$ is the time duration from the last unsuccessfully transmitted packet on the wireless link Li. The parameter g$_f$(x$_f$,L$_i$) therefore represents a distribution of time periods elapsed when transmitting respective messages since the transmission of the last unsuccessfully transmitted message; and the parameter f$_f$(x$_f$,L$_i$) represents a distribution of time periods elapsed between an unsuccessful transmission of a message and the successful transmission of the next one.

Then, the probability P$_{Li}$(x) may be defined as follows, on the basis of the time period from the last successful or unsuccessful transmission: $P_{Li}(x) = \frac{f_s(x - x_{last}, Li)}{g_s(x - x_{last}, Li)}$ if the last transmission was not successful,

$P_{Li}(x) = \frac{f_f(x - x_{last}, Li)}{g_f(x - x_{last}, Li)}$ if the last transmission was not successful, where x represents the instant at which the probability P$_{Li}$(x) is determined and x$_{last}$ represents the instant at which the last transmission of a message has been performed.

The same approach could be used on received messages instead of transmitted ones.

**Fig. 6** schematically represents an algorithm performed by a smart meter 120 of the wireless mesh communications network 100 or 200, or by a concentrator device 110 of the wireless mesh communications network 200. Let's consider in the following that the algorithm is performed by the smart meter 120. The algorithm starts in a step S600.

In a following step S601, the smart meter 120 receives a request from the server device 230. The request may be received directly from the server device 230 or indirectly via the parent node of the smart meter 120.

In a following step S602, the smart meter 120 checks whether the request is correctly received. For instance, the smart meter 120 checks the consistency of the request with a CRC *(Cyclic Redundancy Check)* field contained in the request. If the request is correctly received, the smart meter 120 performs a step S605; otherwise, the smart meter 120 performs a step S603.

In the step S603, the smart meter 120 transmits a wireless link failure message (WLFM) to the server device 230 via its parent node in the spanning tree. The transmitted WLFM indicates that the request has not been correctly received by the smart meter 120. It therefore identifies the wireless link on which the transmission failure has been detected. Then the algorithm ends in a step S615.

It has to be noted that the WLFM messages are signalling messages between the server device 230 and the nodes of the wireless mesh communications network, and are distinct from the ACK/NACK that might be transmitted between two neighbouring nodes at the MAC layer, as already described.

In the step S605, the smart meter 120 checks whether the received request is addressed to itself or to a smart meter that is located in its child sub-tree. The smart meter 120 obtains this information from an identifier of the smart meter, or smart meters, to which the request is addressed, contained in the request transmitted by the server device 230 in the step S502. The smart meter 120 being aware of the spanning tree, or at least to the spanning tree portion including itself, its parent node and its child sub-tree, is able to identify whether the request is addressed to itself or to another smart meter, and whether this other smart meter is located in its child sub-tree. When the received request is addressed to itself, the smart meter 120 performs a step S606; otherwise, the smart meter 120 performs a step S607.

In the step S606, the smart meter 120 retrieves the data requested by the server device 230, builds a response comprising the retrieved data and transmits the response to its parent node. Then the algorithm ends in the step S615.

In the step S607, the smart meter 120 determines the number of hops to reach the addressed smart meter. The smart meter 120 being aware of the spanning tree, and therefore the location of each node in the spanning tree, the smart meter 120 is able to determine said number of hops.

In a following step S608, the smart meter 120 sets a timeout. This timeout is associated with the request received in the step S601. The duration of this timeout is computed at least according to the number of hops determined in the step S607. The smart meter 120 may take into account, to compute the duration of the timeout: the maximum transmission time period from one node to a neighbouring node, the maximum number of allowed retransmissions from one node to a neighbouring node and the maximum allowed message processing time period in a node.

In a preferred embodiment, the smart meter 120 obtains the timeout duration by multiplying the determined number of hops by the already-mentioned per-hop reference time period value.

In a following step S609, the smart meter 120 forwards the received request toward the addressee, i.e. the smart meter identified in the request transmitted by the server device 230 in the step S502. The smart meter 120 therefore forwards the received request to the next smart meter en route toward the addressee according to the spanning tree, which might be the addressee itself.

In a following step S610, the smart meter 120 waits for detecting an event, which can be receiving of an indication (MAC_ERR) from the MAC layer that the transmission performed in the step S609 failed, receiving of a WLFM, receiving of a response (RESP) to the request from the addressee or expiring of the timeout (TO) set in the step S608.

When the layer of the smart meter 120 by which the algorithm of Fig. 6 is implemented receives, from the MAC layer of the smart meter 120, a notification (MAC_ERR) indicating that the request attempted to be relayed generated in response at least one non-acknowledgement, a step S613 is performed.

A WLFM is received by the smart meter 120 when the request forwarded in the step S609 is not correctly received by one smart meter en route from the smart meter 120 to the addressee of the request, or when the response to the request is not correctly received by one smart meter en route from the addressee of the request to the smart meter 120, or when no response nor WLFM has been received by one smart meter en route from the addressee of the request to the smart meter 120 within a predetermined time period. When a WLFM is received, the smart meter 120 performs a step S612.

The timeout set in the step S608 expires when no RESP nor WLFM is received from, or via, the next smart meter en route toward the addressee of the request forwarded in the step S609. When the timeout expires, it means that a transmission failure is detected on the wireless link via which the request has been relayed, or in the child sub-tree of this wireless link. The timeout set in the step S608 is preferably adapted to enable the reception of such a WLFM from any node of the child sub-tree on the route toward the addressee before expiry of the timeout, in order to increase the accuracy in the identification of the wireless link on which the transmission failure occurred. The smart meter 120 consequently performs the step S613.

When the response (RESP) to the request is received from the addressee, the smart meter 120 performs a step S614.

In the step S612, the smart meter 120 forwards the received WLFM toward the server device 230 via its parent node, and the algorithm ends in the step S615.

In the step S613, the smart meter 120 generates and transmits a WLFM towards the server device 230 via its parent node and the algorithm ends in the step S615.

The WLFM generated by the smart meter 120 is representative of a transmission failure that occurred, in the spanning tree portion corresponding to the child sub-tree of the smart meter 120, during a transmission of one request or a response to said request. The WLFM then comprises an indication of a wireless link via which said request has been attempted to be relayed by the smart meter 120. The routes of the spanning tree impacted by the detected link failure are the routes including any node of the child sub-tree of the identified wireless link.

The WLFM therefore identifies the wireless link on which a transmission failure has been detected, whereas it may have occurred on another wireless link of the child sub-tree of the identified wireless link.

Once the smart meter 120 has transmitted the WLFM toward the server device 230, the algorithm ends in the step S615.

In a preferred embodiment, the WLFM generated or forwarded by the smart meter 120 also comprises the data that shall be gathered by the server device 230 and that shall be provided by the smart meter 120, if not yet provided by the smart meter 120 to the server device 230. This allows limiting protocol overhead compared to waiting for receiving a request specifically addressed to the smart meter 120 by the server device 230 and reduces the overall latency for collecting the data by the server device 230.

In the step S614, the smart meter 120 forwards the response (RESP) toward the server device 230. The timeout set in the step S608 is consequently cancelled. Then the algorithm ends in the step S615.

## Claims

1. A method for reducing a time period needed by a data gathering device to collect data from nodes of a wireless mesh communications network, said nodes being interconnected by wireless links, communications between said data gathering device and said nodes being performed according to routes of a spanning tree in the wireless mesh communications network, **characterized in that** said data gathering device performs:

    - obtaining a metric for each route of the spanning tree, the metric being representative of a level of reliability of said route;
    - determining a first scheduling sequence for collecting said data according to the obtained metrics;

- transmitting requests to said nodes according to the first scheduling sequence for collecting said data, each request being addressed to at least one said node;
- updating at least one of said metrics according to variations in transmission conditions in said wireless mesh communications network;
- modifying the first scheduling sequence to obtain a second scheduling sequence according to the metrics after updating; and
- continuing transmitting requests to said nodes according to the second scheduling sequence.

2. The method according to claim 1, **characterized in that** said data gathering device performs:

- receiving from at least one node an information about transmission conditions or variations in transmission conditions over at least one wireless link;
- determining at least one route of the spanning tree comprising said wireless link;
and **in that** the updating of at least one of said metrics is performed for the wireless links comprised in said determined route(s).

3. The method according to claim 2, **characterized in that** said data gathering device performs:

- receiving a wireless link failure report generated by one node, said report comprising an indication of a wireless link via which said request has been attempted to be relayed by said node having generated the report, and said report being representative of a transmission failure that occurred, on said wireless link indicated in the report or in the spanning tree portion corresponding to the child sub-tree of said wireless link indicated in the report, during a transmission of one of said requests or a response to one of said requests;
and **in that** said routes are determined to be the routes including any node of said child sub-tree.

4. The method according to claim 3, **characterized in that** said wireless link failure report is generated by a node when a layer of said node receives, from the medium access control layer of said node, a notification indicating that said request attempted to be relayed generating in response at least one non-acknowledgement.

5. The method according to any one of claims 3 and 4, **characterized in that** said wireless link failure report is generated by a node when a timeout expires without said node receiving a response nor another wireless link failure report, from a node to which one of said request is addressed, to said request with which the timeout is associated.

6. The method according to claim 5, **characterized in that** said timeout is set up by at least taking into account the number of hops in the spanning tree, between the node setting up said timeout and the node to which the request associated with said timeout is addressed.

7. The method according to any one of claims 3 to 6, **characterized in that** the node generating the wireless link failure report performs:

- checking whether said node generating the wireless link failure report already responded to one of said requests,
- including in the wireless link failure report its own data to be collected by said device, when said node generating the wireless link failure report did not already respond to one of said requests.

8. The method according to any one of claims 3 to 7, **characterized in that** said data gathering device performs, upon receiving one of said wireless link failure report:

- incrementing a metric, for each wireless link comprised in said determined route(s);
- sorting the routes of the spanning tree to reach each node from which data remains to be collected according to the metrics;
and **in that** said data gathering device modifies the first scheduling sequence to obtain the second scheduling sequence by taking into account the routes sorted according to the metrics.

9. The method according to claim 2, **characterized in that** said data gathering device performs:

- receiving, from the nodes of said wireless mesh communications network, information representative of a probability of transmission success on at least one wireless link of which said node is one end;
- computing a probability of transmission success on each route to reach each node from which data remains to be collected, according to the received information;
and **in that** said data gathering device modifies the first scheduling sequence to obtain the second scheduling sequence by taking into account the computed probabilities.

**10.** The method according to claim 9, **characterized in that** said data gathering device performs computing said probability of transmission success by performing, for each wireless link of a route:

- determining a number of hops for a message to reach the considered wireless link;
- multiplying the determined number of hops by a per-hop reference time period value, in order to obtain a propagation delay or timeframe;
- determines the instant, or timeframe, at which said wireless link should be in use to transmit either one of said request or a response to one of said request, on the basis of an instant at which the transmission of the request is scheduled and of the obtained propagation delay or timeframe; and
- determining from the received information representative of a probability of transmission success a probability of success of transmission when said wireless link is determined to be used.

**11.** The method according to claim 10, **characterized in that** said data gathering device performs:

- receiving periodically channel estimation, or channel quality indicators, from each node of a route; and
- performing a channel prediction based on the received channel estimation and an aging received channel estimation.

**12.** The method according to claim 10, **characterized in that**, in order to provide information representative of a probability of transmission success on at least one wireless link, each node performs after transmitting a given message:

- updating a first parameter representing a distribution of time periods elapsed when transmitting respective messages since the transmission of the last successfully transmitted message;
- updating a second parameter representing a distribution of time periods elapsed when transmitting respective messages since the transmission of the last unsuccessfully transmitted message;
- updating a third parameter representing a distribution of time periods elapsed when transmitting respective messages since the transmission of the last successfully transmitted message, when the transmission of said given message is successful; and
- updating a fourth parameter representing a distribution of time periods elapsed when transmitting respective messages since the transmission of the last unsuccessfully transmitted message, when the transmission of said given message is successful.

**13.** A device for reducing a time period needed by a data gathering device to collect data from nodes of a wireless mesh communications network, said nodes being interconnected by wireless links, communications between said data gathering device and said nodes being performed according to routes of a spanning tree in the wireless mesh communications network, **characterized in that** said device comprises:

- means for obtaining a metric for each route of the spanning tree, the metric being representative of a level of reliability of said route;
- means for determining a first scheduling sequence for collecting said data according to the obtained metrics;
- means for transmitting requests to said nodes according to the first scheduling sequence for collecting said data, each request being addressed to at least one said node;
- means for updating at least one of said metrics according to variations in transmission conditions in said wireless mesh communications network;
- means for modifying the first scheduling sequence to obtain a second scheduling sequence according to the metrics after updating; and
- means for continuing transmitting requests to said nodes according to the second scheduling sequence.

**14.** A computer program **characterized in that** it comprises program code instructions which can be loaded in a programmable device for implementing the method according to any one of claims 1 to 12, when the program code instructions are run by the programmable device.

**15.** Information storage means, **characterized in that** they store a computer program comprising program code instructions which can be loaded in a programmable device for implementing the method according to any one of claims 1 to 12, when the program code instructions are run by the programmable device.

Fig. 1

Fig. 2

100

110

120b

120a

120c

120d

120e

120f

120g

Fig. 3

110

| SD 303 | 300 CPU |
| 304 | 301 RAM |
| 305 | ROM 302 |

306

Fig. 4A

230

| HDD 313 | 310 CPU |
| 314 | 311 RAM |
| | ROM 312 |

316

Fig. 4B

120

| SD 403 | 400 CPU |
| 404 | 401 RAM |
| 405 | ROM 402 |

406

Fig. 4C

Obtaining/initializing metrics — S500

↓

Determining a scheduling sequence for collecting data — S501

↓

Transmitting requests according to the sequence in use — S502

↓

Obtaining an information about reliability of at least one wireless link — S503

↓

Determining routes comprising the wireless link — S504

↓

Updating metrics — S505

↓

Refining the scheduling sequence — S506

Fig. 5A

Start ~S510

Determining a scheduling
sequence for collecting data ~S511

At least one request
remaining? ~S512

no → End ~S513

yes

Transmitting the next request in sequence ~S514

Response? ~S515

yes

no

Transmission issue? ~S516

no

yes

Determining a wireless link on which
the transmission issue is detected ~S517

Determining routes comprising
the determined wireless link ~S518

Updating metrics ~S519

Refining the scheduling sequence ~S520

Fig. 5B

Start — S530

Determining a scheduling sequence for collecting data — S531

At least one request remaining? — S532

no → End — S533

yes

Transmitting the next request in sequence — S534

RESP

Waiting — S535

INFO

Obtaining an information about wireless link reliability — S536

Determining routes comprising the determined wireless link — S537

Updating metrics — S538

Refining the scheduling sequence — S539

Fig. 5C

Start — S600

Receiving a request — S601

S602 — Correct? — no → Transmitting WLFM — S603

yes

yes — For a downlink node? — S605 — no → Transmitting a response uplink — S606

Determining the number of hops to reach the addressed node — S607

Setting a timeout according to the determined number of hops — S608

Forwarding the request to a next node en route — S609

MAC_ERR — Waiting — S610

S610 — TO — WLFM — RESP

Forwarding RESP uplink — S614

S612 — Forwarding WLFM uplink

S613 — Transmitting WLFM uplink

End

S615

Fig. 6

700a    700b    700c    700e    700f    700g    700d

time

## Fig. 7A

700d    700g    700e    700f

time

## Fig. 7B

Europäisches
Patentamt

European
Patent Office

Office européen
des brevets

# EUROPEAN SEARCH REPORT

Application Number

EP 11 18 5261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ABDELMALIK BACHIR ET AL: "MAC Essentials for Wireless Sensor Networks", IEEE COMMUNICATIONS SURVEYS, IEEE, NEW YORK, NY, US, vol. 12, no. 2, 1 April 2010 (2010-04-01), pages 222-248, XP011307772, ISSN: 1553-877X * page 234, paragraph Section C "Principal Protocols" - page 236 * | 1-15 | INV. H04W40/24 H04L12/56 H04W84/18 |
| X | PENG LIN ET AL: "Medium access control with a dynamic duty cycle for sensor networks", WIRELESS COMMUNICATIONS AND NETWORKING CONFERENCE, 2004. WCNC. 2004 IE EE ATLANTA, GA, USA 21-25 MARCH 2004, PISCATAWAY, NJ, USA,IEEE, vol. 3, 21 March 2004 (2004-03-21), pages 1534-1539, XP010708133, ISBN: 978-0-7803-8344-9 * page 1535, paragraph Section II "DSMAC Design" - page 1537 * | 1-15 | |
| A | US 2009/322518 A1 (LIANG CHIEH-JAN MIKE [US] ET AL) 31 December 2009 (2009-12-31) * paragraph [0006] - paragraph [0032] * | 1-15 | TECHNICAL FIELDS SEARCHED (IPC) H04W H04L G08C |

-/--

The present search report has been drawn up for all claims

| Place of search | Date of completion of the search | Examiner |
|---|---|---|
| The Hague | 6 March 2012 | Ciurel, Cristian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 18 5261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HA R W ET AL: "SS-trees: a cross-layer organizational approach for mesh-based wide-area wireless sensor networks", BROADBAND NETWORKS, 2005 2ND INTERNATIONAL CONFERENCE ON BOSTON, MA OCT. 3-7, 2005, PISCATAWAY, NJ, USA,IEEE, 3 October 2005 (2005-10-03), pages 885-894, XP010890301, DOI: 10.1109/ICBN.2005.1589692 ISBN: 978-0-7803-9276-2 * page 885, paragraph Section I "Introduction" * * page 886, paragraph II Sleep Cheduling Issues and the SS-Tree Concept - page 888; figures 2(a)-2(e) * | 1-15 | |
| A | WEN-ZHAN SONG ET AL: "Design and Deployment of Sensor Network for Real-Time High-Fidelity Volcano Monitoring", IEEE TRANSACTIONS ON PARALLEL AND DISTRIBUTED SYSTEMS, IEEE SERVICE CENTER, LOS ALAMITOS, CA, US, vol. 21, no. 11, 1 November 2010 (2010-11-01), pages 1658-1674, XP011303211, ISSN: 1045-9219 * the whole document * | 1-15 | TECHNICAL FIELDS SEARCHED (IPC) |
| A | PARADIS L ET AL: "A data collection protocol for real-time sensor applications", PERVASIVE AND MOBILE COMPUTING, ELSEVIER, NL, vol. 5, no. 4, 1 August 2009 (2009-08-01), pages 369-384, XP026144205, ISSN: 1574-1192, DOI: 10.1016/J.PMCJ.2009.04.003 [retrieved on 2009-05-03] * the whole document * | 1-15 | |

The present search report has been drawn up for all claims

| Place of search | Date of completion of the search | Examiner |
|---|---|---|
| The Hague | 6 March 2012 | Ciurel, Cristian |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................

& : member of the same patent family, corresponding
    document

EPO FORM 1503 03.82 (P04C01)

**EP 2 597 911 A1**

## ANNEX TO THE EUROPEAN SEARCH REPORT
## ON EUROPEAN PATENT APPLICATION NO.

EP 11 18 5261

This annex lists the patent family members relating to the patent documents cited in the above-mentioned European search report.
The members are as contained in the European Patent Office EDP file on
The European Patent Office is in no way liable for these particulars which are merely given for the purpose of information.

06-03-2012

| Patent document cited in search report | Publication date | Patent family member(s) | Publication date |
|---|---|---|---|
| US 2009322518 A1 | 31-12-2009 | NONE | |

EPO FORM P0459

For more details about this annex : see Official Journal of the European Patent Office, No. 12/82

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MIKAEL STERNAD ; DANIEL ARONSSON.** Channel estimation and prediction for adaptive OFDM downlinks. *Vehicular Technology Conference,* 2003

- **TAO JIANG ; NICHOLAS D. SIDIROPOULOS ; GEORGIOS B. GIANNAKIS.** Kalman Filtering for Power Estimation in Mobile Communications. *IEEE Trans. Wireless Commun.*